# EUROPEAN PATENT SPECIFICATION

(11) **EP 3 081 900 B1**
(45) Date of publication and mention of the grant of the patent: **29.08.2018**
(21) Application number: 16163811.9
(22) Date of filing: 05.04.2016
(51) Int. Cl.: G01B 11/25, G06T 7/521, G06T 1/00, B25J 19/02, B25J 9/16, G06K 9/20

(54) **MEASUREMENT DEVICES AND METHODS FOR MEASURING THE SHAPE OF AN OBJECT TO BE MEASURED, AND METHOD OF MANUFACTURING AN ARTICLE**
MESSVORRICHTUNGEN UND MESSVERFAHREN ZUR MESSUNG DER FORM EINES ZU VERMESSENDEN OBJEKTS, UND ARTIKELHERSTELLUNGSVERFAHREN
DISPOSITIFS ET PROCÉDÉS DE MESURE DE LA FORME D'UN OBJET À MESURER, ET PROCÉDÉ DE FABRICATION D'ARTICLES

(30) Priority: 10.04.2015 JP 2015081064
(43) Date of publication of application: 19.10.2016
(73) Proprietor: Canon Kabushiki Kaisha, Tokyo 146-8501 (JP)
(72) Inventor: KITAMURA, Tsuyoshi, Ohta-ku, Tokyo (JP); TOKIMITSU, Takumi, Ohta-ku, Tokyo (JP)
(74) Representative: Garner, Jonathan Charles Stapleton

(56) References cited:
- US-A1- 2012 316 820
- US-A1- 2014 063 192
- RYUSUKE SAGAWA ET AL: "Dense 3D reconstruction method using a single pattern for fast moving object", COMPUTER VISION, 2009 IEEE 12TH INTERNATIONAL CONFERENCE ON, IEEE, PISCATAWAY, NJ, USA, 29 September 2009 (2009-09-29), pages 1779-1786, XP031672727, ISBN: 978-1-4244-4420-5

## Description

### BACKGROUND OF THE INVENTION

### Field of the Invention

The present disclosure relates to measurement devices for measuring a shape of an object to be measured, measurement methods, and a method of manufacturing an article.

### Description of the Related Art

As a technique to measure a shape of an object to be measured, an optical measurement device is known. There are various methods that are used by the optical measurement device and one of the methods is referred to as a pattern projection method. In the pattern projection method, the shape of the object to be measured is obtained by projecting a predetermined pattern onto the object to be measured and picking up the image thereof, detecting the pattern in the taken image, and calculating range information at each pixel position using the principle of triangulation. There are various modes in the pattern used in the projection method, a representative pattern of which is a pattern (a dot line pattern) in which disconnection dots (dots) are disposed on a pattern including alternating bright lines and dark lines (see Japanese Patent No. 2517062). Information on the coordinates of the detected dots provides indexes that indicate to which line each of the projected line corresponds on the pattern of the mask, which is the pattern generation unit, such that the projected lines can be distinguished from each other. As described above, the dots serve as distinguishing portions that distinguish the lines from each other.

Influence of random noise of the taken image is included in the factors that decrease the measuring accuracy of the pattern projection method. In detecting the pattern in the taken image, typically, the coordinates of the pattern are specified by detecting the peak where the luminance value of the image of the pattern is the largest. In the Meeting on Image Recognition and Understanding (MIRU 2009), pp. 222-229, in addition to such a peak, by also detecting a negative peak in which the luminance value of the image of the pattern is the smallest, an increase in the density (the number of detection points per unit area) of the detection point is achieved. By increasing the detection points when detecting the pattern in the taken image, the S/N ratio is improved and the influence of the random noise of the taken image can be reduced. In the Meeting on Image Recognition and Understanding (MIRU 2009), pp. 222-229, measurement is performed by projecting a grid pattern and no dot line pattern is disclosed. It has been found that in the pattern projection method using a dot line pattern, when the negative peak is detected as in Meeting on Image Recognition and Understanding (MIRU 2009), pp. 222-229, an error occurs in the detecting position of the negative peak at an area around the dot (the distinguishing portion). As described above, a positional error may occur at the detection point near the dot (the distinguishing portion).

US2014/063192 describes capturing an image of an object with a projection pattern including code symbols. In one embodiment disclosed therein, in a region where the symbol exists, the phase (shape) of the captured image is determined based on interpolation of the surrounding region rather than by performing a calculation using a light intensity distribution.

### SUMMARY OF THE INVENTION

The present invention in its first aspect provides measurement devices that measure a shape of an object to be measured as specified in independent claims 1 and 14 and dependent claims 2-13, 15 and 16.

The present invention in its second aspect provides methods of measuring a shape of an object to be measured as specified in independent claims 17 and 18 and dependent claim 19.

The present invention in its third aspect provides a system as specified in dependent claim 20.

The present invention in its fourth aspect provides a method of manufacturing an article as specified in independent claim 21.

Further features of the present invention will become apparent from the following description of exemplary embodiments with reference to the attached drawings.

### BRIEF DESCRIPTION OF THE DRAWINGS

Fig. 1 is a schematic diagram illustrating a configuration of a measurement device that is an aspect of the present disclosure.
Fig. 2 is a diagram illustrating an example of a dot line pattern projected on an object to be measured.
Fig. 3 is a diagram illustrating an image of an area around a dot.
Fig. 4 is a diagram illustrating luminosity distribution of evaluation sections of an image.
Fig. 5 is a diagram illustrating the luminosity distribution in which the portion around the dot has been enlarged.
Fig. 6 is a diagram illustrating a relationship between a distance from the dot and a measurement error.
Fig. 7 is a diagram illustrating a flow of the measurement.
Fig. 8 is a diagram illustrating luminosity distribution of an image in a case in which the duty ratio of the pattern light is 1:4.
Fig. 9 is a diagram illustrating luminosity distribution of an image in a case in which the duty ratio of the pattern light is 1:1.
Fig. 10 illustrates a diagram of a control system including a measurement device and a robot arm.

### DESCRIPTION OF THE EMBODIMENTS

Hereinafter, preferred embodiments of the present disclosure will be described with reference to the accompanying drawings. Note that in each drawing, the same members will be attached to the same reference numerals and redundant description thereof will be omitted.

### First Exemplary Embodiment

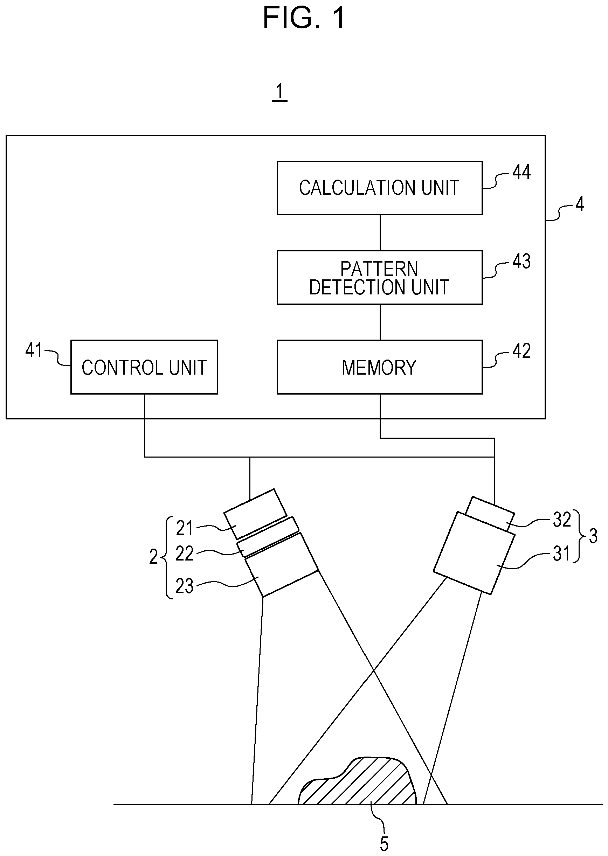

Fig. 1 is a schematic diagram illustrating a configuration of a measurement device 1 that is an aspect of the present disclosure. The measurement device 1 measures the shape (a three-dimensional shape, a two-dimensional shape, and a position and orientation, for example) of an object 5 to be measured by using a pattern projection method. As illustrated in Fig. 1, the measurement device 1 includes a projection unit 2, an image pickup unit 3, and a processing unit 4.

The projection unit 2 includes, for example, a light source unit 21, a pattern generation unit 22, and an optical projection system 23, and projects a predetermined pattern onto the object 5 to be measured. The light source unit 21 performs, for example, Kohler illumination such that light radiated from a light source is on the pattern generation unit 22 in a uniform manner. The pattern generation unit 22 creates a pattern light that is projected onto the object 5 to be measured and, in the present exemplary embodiment, is a mask on which a pattern is formed by performing chrome etching on a glass substrate. Note that the pattern generation unit 22 may be a digital light processing (DLP) projector, a liquid crystal projector, or a DMD, which is capable of generating any pattern. The optical projection system 23 is an optical system that projects the pattern light generated by the pattern generation unit 22 onto the object 5 to be measured.

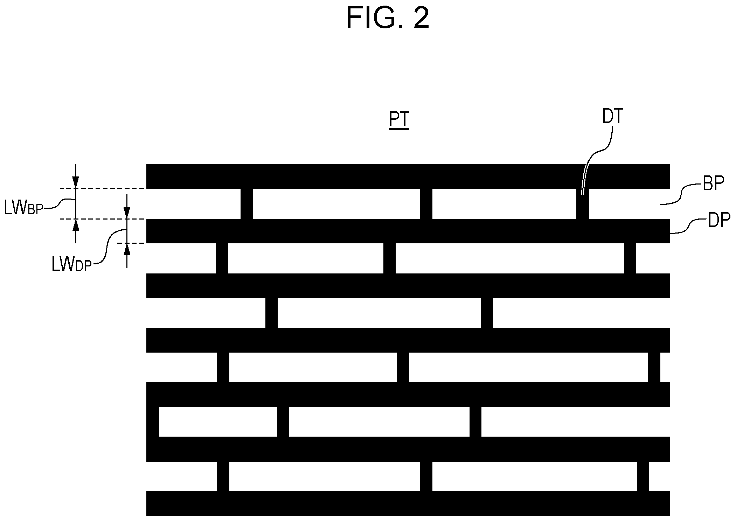

Fig. 2 is a diagram illustrating a dot line pattern PT that is an example of a pattern that is generated by the pattern generation unit 22 and that is projected on the object 5 to be measured. As illustrated in Fig. 2, the dot line pattern PT includes a periodical pattern alternately including a bright line BP, in which bright portions (white) and dots (dark portions) DT (black) are continuously formed in one direction, and a dark line DP (black), which extends in one direction. The dots DT are each provided on the bright line BP and between the bright portions so as to disconnect the bright portions with respect each other in the direction in which the bright portions extend. The dots are distinguishing portions that distinguish the bright lines from each other. Since the positions of the dots on each bright line are different, information on the coordinates (positions) of the detected dots provides indexes that indicate to which line each of the projected bright line corresponds on the pattern generation unit 22, thus, enabling the projected bright lines to be distinguished from each other. The ratio (hereinafter, referred to as a "duty ratio") between a width (a line width) LW_{BP} of each bright line BP of the dot line pattern PT and the width LW_{DP} of each dark line DP is assumed to be 1:1.

The image pickup unit 3 includes, for example, an image-pickup optical system 31 and an image pickup element 32, and obtains an image by taking the object 5 to be measured. In the present exemplary embodiment, the image pickup unit 3 performs image pickup of the object 5 to be measured on which the dot line pattern PT has been projected to acquire a so-called range image that is an image that includes the portion corresponding to the dot line pattern PT. The image-pickup optical system 31 is an image-forming optical system that forms an image of the dot line pattern PT projected on the object 5 to be measured on the image pickup element 32. The image pickup element 32 is an image sensor including a plurality of pixels that performs image pickup of the object 5 to be measured on which the pattern has been projected, and includes a CMOS sensor or a CCD sensor, for example.

Based on the image acquired with the image pickup unit 3, the processing unit 4 obtains the shape of the object 5 to be measured. The processing unit 4 includes a control unit 41, a memory 42, a pattern detection unit 43, and a calculation unit 44, and is constituted by a processor, such as a CPU, a RAM, a controller chip, and the like. The control unit 41 controls the operations of the projection unit 2 and the image pickup unit 3, specifically, the control unit 41 controls the projection of the pattern onto the object 5 to be measured and the image pickup of the object 5 to be measured on which the pattern has been projected. The memory 42 stores the image acquired by the image pickup unit 3. Using the image stored in the memory 42, the pattern detection unit 43 detects the peaks, the edges, and the dots (the position subject to the detection) of the pattern light in the image to obtain the coordinates of the pattern, in other words, to obtain the position of the pattern light in the image. Using the indexes of the lines distinguished from the information of the positions (coordinates) subject to the detection and the dots, the calculation unit 44 calculates the range information (three-dimensional information) of the object 5 to be measured at each pixel position of the image pickup element 32 using the principle of triangulation.

Hereinafter, pattern detection with the pattern detection unit 43 will be described in detail. The pattern detection unit 43 detects the image of the dot line pattern PT included in the range image and specifies the position of the dot line pattern PT in the range image. Specifically, the pattern detection unit 43 specifies the positions of the lines of the dot line pattern PT in the range image from the optical image information, in other words, from the luminosity distribution (the light intensity distribution), of the evaluation sections each extending in a direction intersecting the lines of the dot line pattern PT, for example, in a direction intersecting the lines.

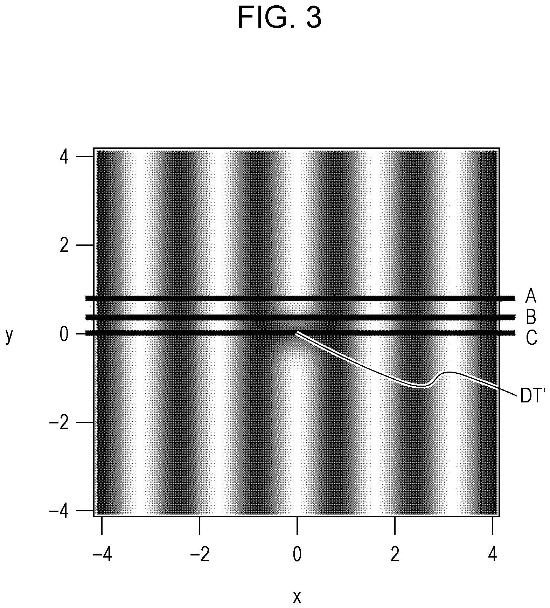

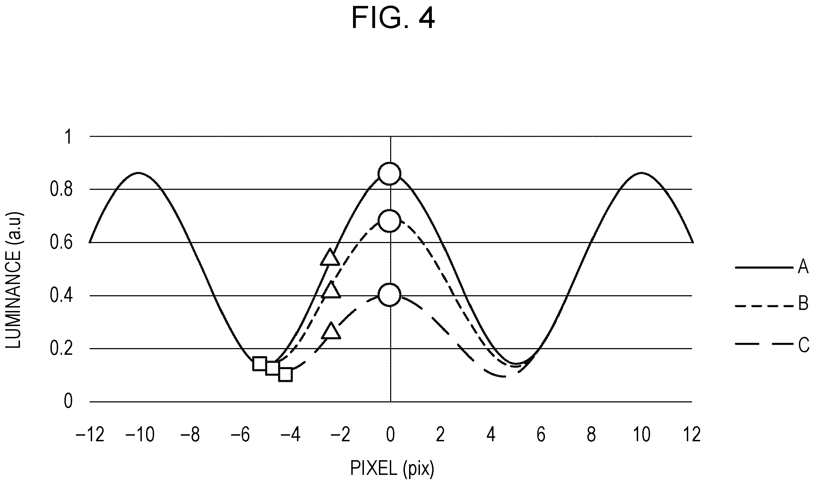

Fig. 3 illustrates an image around a position DT' that corresponds to a center position of a dot DT when the dot line pattern PT is projected onto a reference plane. In the above, the image is calculated from a simulation. The axis of abscissas x and the axis of ordinates y of the image corresponds to the position of the image pickup surface in the image pickup element 32. Referring to Figs. 3 and 4, the position subject to the detection (a detection point) will be described. The coordinates of the detection point is calculated from an optical image information (the luminosity distribution) of an evaluation section extending in, for example, an X direction that is orthogonal to a Y direction in which the lines of the dot line pattern PT extend.

Fig. 4 illustrates an optical image (the luminosity distribution) of an evaluation section A that extends in the X direction and that does not pass through the position corresponding to the dot DT, in other words, that is not affected by the dot DT; an optical image of an evaluation section B that extends in the X direction and the vicinity of the position DT' that corresponds to the center position of the dot DT; and an optical evaluation section C that extends in the X direction and that passes through the position DT'. The axis of abscissas in Fig. 4 is the pixel position of the image pickup element 32, and the axis of ordinates thereof is the luminance. In Fig. 4, in each of the optical images, a peak position P in which the luminance value becomes the largest (at its maximum) in the portion around the zero point is indicated with a circle, an edge position E is indicated with a triangle, and a negative peak position NP in which the luminance value becomes the smallest (at its minimum) is indicated with a square. The peak position and the negative peak position can be obtained by calculating the extremal values from the luminosity distribution, and the edge portion can be obtained by calculating the extremal value from a luminance gradient obtained by first order differentiation of the luminosity distribution. Regarding the edge position, although there are two edges in which the luminance gradient is at its maximum or minimum, Fig. 4 illustrates the edge position in which the luminance gradient is at its maximum. Furthermore, the edge position is not limited to the extremal value of the luminance gradient, but may be a position that is determined from an evaluation value (an extremal value or a reference value) that is an evaluation of the luminance gradient. Furthermore, the edge position may be obtained by calculating a position that is a median value between the maximum and minimum value of the luminance, or may be obtained by calculating the intermediate point between the peak position P and the negative peak position NP. In other words, other than the peak position P and the negative peak position NP, the intermediate position between the peak position P and the negative peak position NP may be detected.

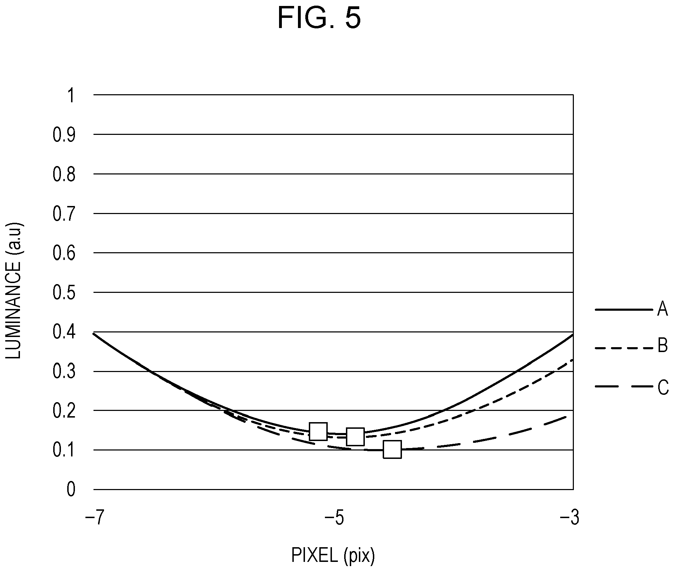

Fig. 5 is a diagram of an enlarged portion near the negative peak positions illustrated in Fig. 4. It can be seen in Fig. 5 that the negative peak positions of the evaluation sections A, B, and C are displaced from each other. The displacement in the negative positions of the evaluation sections A, B, and C causes an error in calculating the range information of the object 5 to be measured. Specifically, when corresponding the pattern on the pattern generation unit 22, since the negative peak position is correlated to the positon of the dark line on the pattern generation unit 22, the displacement of the negative peak positions represents the displacement in the position of the dark line generated by the pattern generation unit 22. Due to the displacement in the position of the dark line, each piece of range information is different. However, in the evaluation sections A, B, and C, since the distances to the reference plane are the same, the difference leads to a measurement error. If the distances to the object 5 to be measured are different, the positions of the lines of the dot line pattern PT are displaced. Since the displacement in the positions of the lines due to the displacement in the negative peak positions and the displacement in the positions of the line due to the difference in the distances to the object 5 to be measured are both calculated without any discrimination, a measurement error occurs.

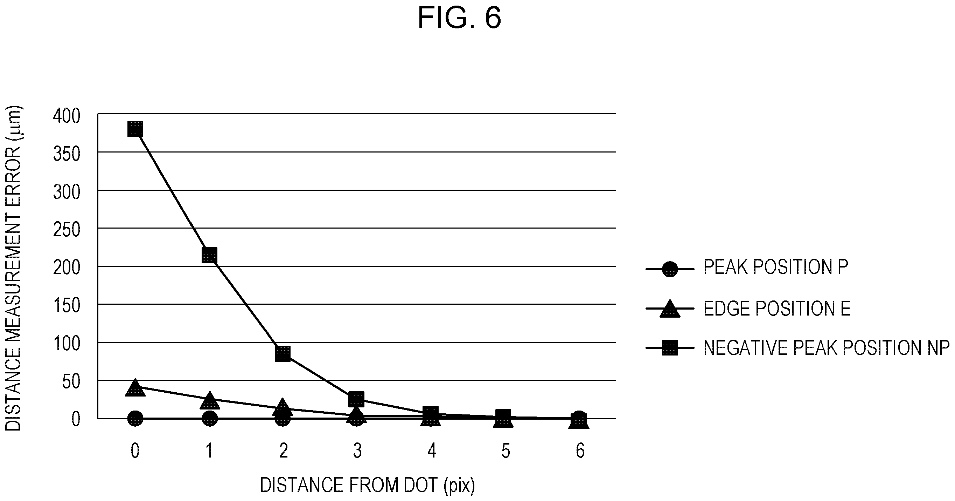

A relationship between the distance from the dot in the Y direction in which the lines of the dot line pattern extend and the measurement error will be described next. Fig. 6 illustrates a relationship between the distance from the dot in the Y direction and the measurement error. The axis of abscissas in Fig. 6 represents the distance, in pixels (pix), from the position DT' corresponding to the center position of the dot DT in the Y direction in which the lines of the dot line pattern PT extends. The position above position DT', which corresponds to the center position of the dot DT, or the position that is the closest to position DT' is represented by 0. The axis of ordinates in Fig. 6 represents the measurement error (displacement) of the calculated distance. In Fig. 6, the measurement error related to the peak position P in which the luminance value becomes the largest (at its maximum) is indicated with a circle, the measurement error related to the edge position E is indicated with a triangle, and the measurement error related to the negative peak position NP in which the luminance value becomes the smallest (at its minimum) is indicated with a square.

As for the peak position P, regardless of the distance from the dot DT, since there is no displacement of the detection point, there is almost no measurement error. As for the edge position E, a measurement error of 42 µm occurs at the position closest to the dot DT due to the displacement of the detection point caused by the dot DT. Note that the occurrence of the same amount of measurement error has been confirmed in the evaluation of the edge with the smallest luminance gradient as well. As for the negative peak position NP, a measurement error of 380 µm occurs at the position closest to the dot DT due to the displacement of the detection point caused by the dot DT.

Other than the peak positions P, when the negative peak positions NP are included as the detection points of the pattern light detected by the pattern detection unit 43, the density of the detection points (the number of detection points per unit area) is doubled. Furthermore, when the two positions, namely, the positions in which the luminance gradient is at its maximum and the positions in which the luminance gradient is at its minimum are included, the density of the detection points is quadrupled. Accordingly, data for calculating the distance increases with the increase in the density of the detection points, and the S/N ratio with respect to the random noise of the image pickup element 32 is improved enabling measurement to be performed with higher accuracy.

However, as described above, regarding the detection points around the dots, compared with the random noise of the image pickup element 32, which is of a tens of micrometers, the measurement error of each negative peak positions NP is larger. Accordingly, depending on the dot density and the number of lines in the dot line pattern PT, there are cases in which the measurement accuracy improves when the negative peak positions NP are not employed as the detection points.

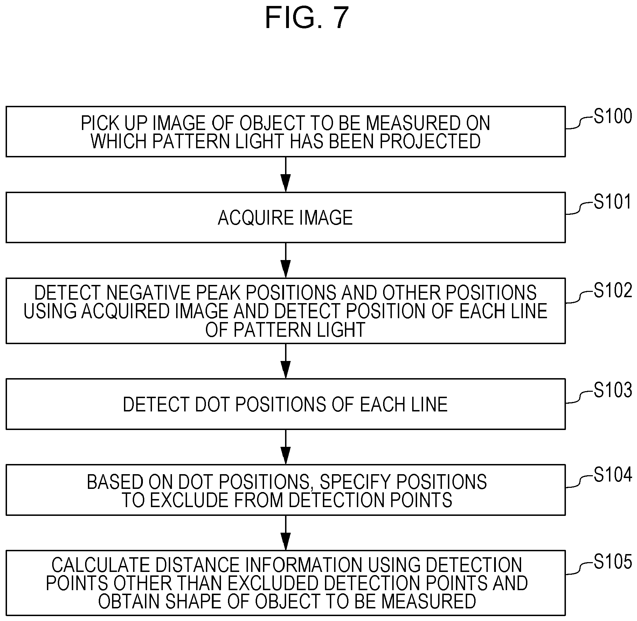

Accordingly, in the present exemplary embodiment, information on the shape of the object to be measured is obtained while the negative peak positions NP near the dots are excluded from the detection points. A flow of the measurement is illustrated in Fig. 7. First, an image of the object to be measured on which the pattern light has been projected is picked up and the image is stored in the memory 42 (S100). Subsequently, the pattern detection unit 43 of the processing unit 4 acquires the image of the object to be measured stored in the memory 42 (S101). Then, the pattern detection unit 43 uses the acquired image to obtain the peak positions P and the negative positions NP as detection points of the positions in the Y direction through calculation using luminosity distribution (evaluation sections) in the X direction, and detects the positions of the lines of the pattern light (S102). At this point, whether to perform detection of the edge positions E (the positions between the peak positions P and the negative positions NP) is optional. Regarding the peak position P, there may be cases in which the portion nearest (closest) to the peak position P has a certain width in the luminosity distribution. In such a case, a position within the nearest (closest) portion may be selected or the center position thereof may be selected as the largest (maximum) position. The same applies to the negative peak position NP. Regarding the detection of the lines, for example, by smoothing the luminance values of the bright portions and the dots in each bright line by applying a Gaussian filter or the like to the image, even if there are portions in the bright portions that are disconnected by the dots, the above bright portions can each be detected as a single continuous line. Subsequently, the pattern detection unit 43 detects the positions of the dots in each line (S103). Specifically, the positions of the dots can be detected with the luminosity distribution of detection lines that are configured by connecting, in the Y direction, the peak positions P that are detected by the evaluation sections. For example, the position in the luminosity distribution of the detection line having the minimum value may be obtained as the center position of the dot (dot detection processing). Subsequently, based on the positions of the dots, the pattern detection unit 43 specifies the negative peak positions NP that are to be excluded from the detection point (S104). Specifically, since the measurement errors at the negative peak positions NP in the evaluation section C passing through the dot DT and in the evaluation section B near (around) the dot DT are large, the above negative peak positions NP are excluded from the detection points. In other words, the negative peak positions at the dot or around the dot are excluded from the detection points. The positions that are excluded are positions that are affected by the displacement caused by the dot, and in the examples in Figs. 3 and 4, are positions between the first bright line in which the dot is provided and second bright lines that are next to the first bright line. Furthermore, the excluded negative peak positions NP may be specified based on the distance (the number of pixels) in the Y direction from the position DT' that corresponds to the center position of the dot DT. As illustrated in Fig. 6, the negative peak positions NP in which the distances (the number of pixels) from the dot DT are 0, 1, or 2 may be excluded from the detection points. Furthermore, the calculation unit 44 obtains information on the shape of the object to be measured by calculating the range information on the basis of the negative peak positions NP of the peak position P and that of the evaluation section A that are negative peak positions NP other than the excluded negative peak portions NP and on the basis of the edge positions E when the edge positions E are detected (S105).

It has been described that displacement occurs in the detection result of the edges and negative peaks near the dots in the present exemplary embodiment. Since the dot positions are specified by the dot detection described above, the detected negative peaks that are near the dot positions may be selected and excluded. As regards the negative peaks that are not near the dots, almost no displacement occurs in the detection result. Note that since the dots are shorter than the bright portions in the bright lines and the number of detection points in portions other than the vicinities of the dots are larger than the number of detection points in the vicinities of the dots, the advantageous effect obtained through increase in the detection points can be sufficiently obtained even if the detection points in the vicinities of the dots are excluded.

As described above, in the present embodiment, measurement accuracy is improved with the increase in the density of the detection points, while information on the shape of the object to be measured is obtained with a higher accuracy by not using the negative peak positions with relatively low measurement accuracies as the detection points. Furthermore, with the increase in the density of the detection points, it is possible to measure the size of a smaller object to be measured.

### Second Exemplary Embodiment

Description of a second exemplary embodiment will be given next. In the present exemplary embodiment, the dot line pattern is different from that of the first exemplary embodiment. Note that description that overlaps the first exemplary embodiment will be omitted.

In the present exemplary embodiment, the dot line pattern is a periodical pattern alternately including dark lines, in which dark portions and dots (bright portions) continue in a single direction, and bright lines extending in the single direction. The dots are each provided on the dark line and between the dark portions so as to disconnect the dark portions with respect each other in the direction in which the dark portions extend. The dots are distinguishing portions that distinguish the dark lines from each other. In other words, in the pattern of the present exemplary embodiment, the bright and dark of the first exemplary embodiment are inverted with respect to each other.

As in Figs. 4 and 5, in the first exemplary embodiment, while almost no displacement occurs at the peak position P, there are displacements in the negative peak position NP. Accordingly, as in the second exemplary embodiment, when the bright and dark are inverted with respect to each other, almost no displacement occurs at the negative peak portion while there are displacements in the peak position where it is the largest (at its maximum) in the luminosity distribution.

Accordingly, in the present exemplary embodiment, based on the positions of the dots, the pattern detection unit 43 specifies the largest (maximum) peak positions that are to be excluded from the detection points among the plurality of detection points obtained from luminosity distribution of the evaluation sections. The positions that are excluded are positions that are affected by the displacement caused by the dot, and are located on the dot or around the dot, for example, the peak positions in the positions between the first dark line in which the dot is provided and second dark lines that are next to the first dark line are excluded from the detection points. Subsequently, using the positions of the detection points (the negative peaks and the peaks) other than the peak positions that have been excluded, the calculation unit 44 calculates the range information and obtains information on the shape of the object to be measured.

As described above, in the pattern of the second exemplary embodiment as well, by calculating the distance while excluding the detection points in which the measurement errors occur, an advantageous effect that is similar to that of the first exemplary embodiment is obtained.

### Third Exemplary Embodiment

Description of a third exemplary embodiment will be given next. Note that description that overlaps the first exemplary embodiment will be omitted.

While in the first exemplary embodiment, an example in which the negative peak positions near the dots are excluded from the detection points have been described, in the present exemplary embodiment, an example in which the edge positions near the dots are excluded from the detection points will be given.

As illustrated in Fig. 6, a measurement error occurs in the edge position E as well. Accordingly, information on the shape of the object to be measured can be obtained while excluding the edge positions near the dots from the detection points.

In the present exemplary embodiment, the pattern detection unit 43 uses the acquired image to obtain detection points by calculating the peak positions P or the negative peak positions NP, and the edge positions E of each position in the Y direction from the luminosity distribution (evaluation sections) in the X direction. Then, the positions of the lines of the pattern light are detected from the detection points. Note that similar to that first exemplary embodiment, the edge position is not limited to the extremal value of the luminance gradient, but may be a position that is determined from an evaluation value that is an evaluation of the luminance gradient. Furthermore, the edge position may be obtained by calculating a position that is a median value between the maximum and minimum value of the luminance, or may be obtained by calculating the intermediate point between the peak position P and the negative peak position NP. In other words, the intermediate position between the peak position P and the negative peak position NP may be detected.

Subsequently, based on the positions of the dots, the pattern detection unit 43 specifies the edge positions that are to be excluded from the detection points among the plurality of detection points obtained from luminosity distribution of the evaluation sections. Then, using the edge positions, and the negative peak positions or the peak positions that are detection points other than the edge positions that have been excluded, the calculation unit 44 calculates the range information and obtains information on the shape of the object to be measured.

Note that since the measurement errors related to the edge positions E are small compared to those of the negative peak positions, according to conditions such as when the measurement accuracy is low due to low density of the detection points and due to influence of random noise of the image pickup element, the edge positions may be employed as the detection points while the range information is calculated.

The following method may be considered for determining whether the edge positions are excluded from the detection points. When comparison between the positions of the dots that have been detected through the dot detection processing and the edge positions near the dots that have been detected through edge detection processing show that there is a large deviation therebetween, it can be considered that that there are errors in the positions of the detection points. Such detection points of the edge positions may be determined as unsuitable detection points and the edge positions may be excluded to exclude the detection points in which measurement errors occur, and, as a result, the measurement accuracy can be increased.

Exemplary embodiments of the present invention have been described above; however, the present invention is not limited by the exemplary embodiments and various modification can be made without departing from the scope of the invention, which is defined by the appended claims.

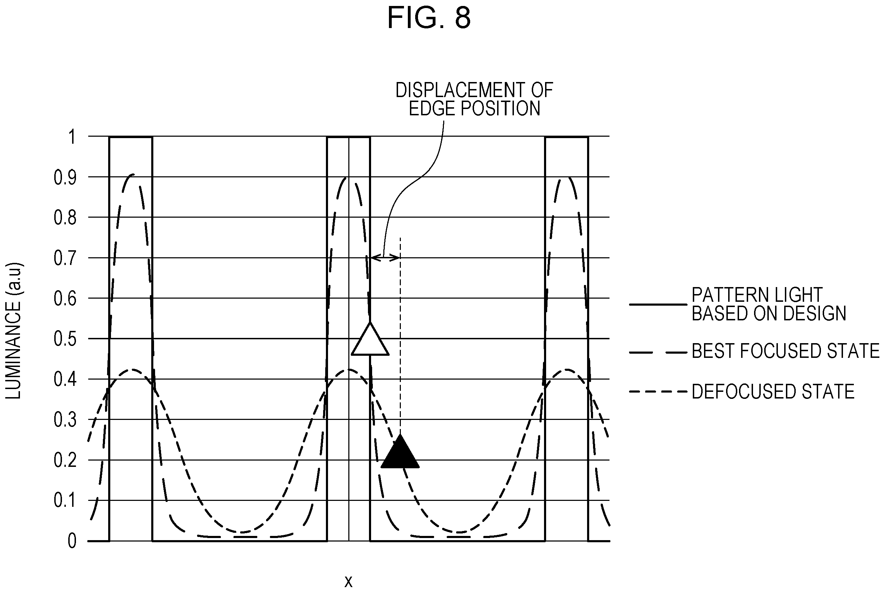

In the exemplary embodiments described above, the duty ratio of each bright line and each dark line of the dot line pattern PT is 1:1; however, the duty ratio does not necessarily have to be 1:1. However, it is favorable that the ratio is 1:1 in detecting the edge positions. Fig. 8 illustrates a pattern light based on design in which the duty ratio of the bright line and the dark line is bright line: dark line = 1:4, and the luminosity distribution of the measured images. The axis of abscissas is a position in the X direction orthogonal to the direction in which each line extends, and the axis of ordinates is luminance. As the measured images, luminosity distribution in a case in which image pickup is performed in the image pickup element in the best focused state (optimal focus) and luminosity distribution in a case in which image pickup is performed in a defocused state (out of focus) shifted by 40 mm from the best focused position are illustrated.

According to Fig. 8, it can be seen that the edge position (a white hollow triangle) detected from the luminosity distribution of the image on which image pickup with optimal focus has been performed and the edge position (a black triangle) detected from the luminosity distribution of the image on which image pickup out of focus has been performed are displaced with respect to each other. When converted into a distance calculation error, the above displacement amount of the edge position is 267 µm. Accordingly, it can be understood that in the pattern light having a duty ratio of 1:4, the defocus causes a distance calculation error caused by the edge displacement to occur.

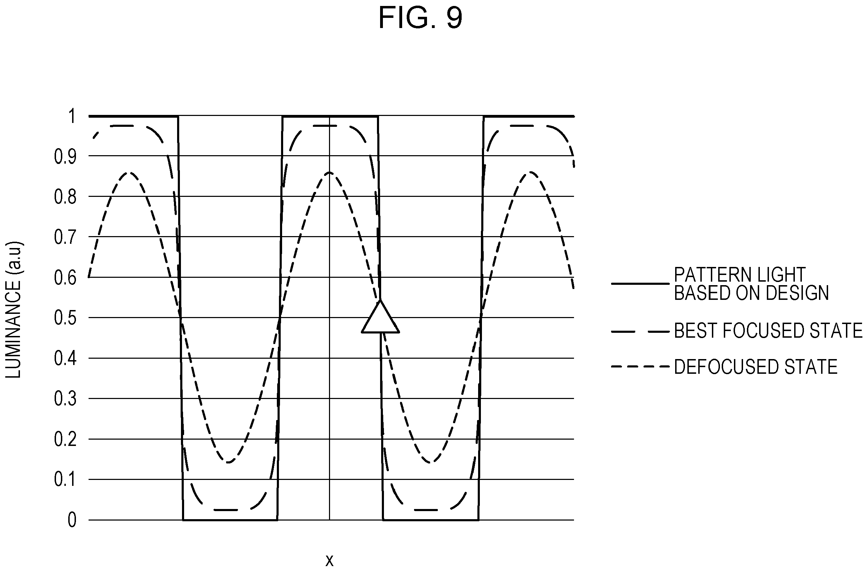

Meanwhile, Fig. 9 is related to the pattern in which the duty ratio of each bright line and each dark line of the dot line pattern PT is 1:1 and illustrates luminosity distribution obtained by evaluation under the same condition as that of Fig. 8. According to Fig. 9, it can be seen that no displacement occurs between the edge position (a white hollow triangle) detected from the luminosity distribution of the image on which image pickup with optimal focus has been performed and the edge position (the white hollow triangle) detected from the luminosity distribution of the image on which image pickup out of focus has been performed. It is assumed that, in the case in which the pattern with the duty ratio of 1:1 is projected, in the luminosity distribution of the image, although the contrast is changed by the defocus, no displacement occurs in the peak positions, the negative peak positions, and the edge portion that is substantially the intermediate point thereof. Accordingly, considering the influence exerted during a defocused state by the displacement in detection, it is desirable that the duty ratio is near 1:1 when the edge positions are used as the detection points.

Furthermore, the pattern that is generated by the pattern generation unit 22 and that is projected on the object 5 to be measured is not limited to a dot line pattern. Not limited to the bright portion and the dark portion, the pattern may be any pattern that includes a plurality of lines, such as a tone pattern or a multicolor pattern. Furthermore, the lines may be straight lines or a curved line. Furthermore, the distinguishing portion does not have to be a dot and may be any mark that allows each line to be distinguished from each other, such as a round shaped portion or a portion with a narrowed width. Furthermore, in the bright line BP, the areas in which the dots occupy may be larger than the areas in which the bright portions occupy.

### Fourth Exemplary Embodiment

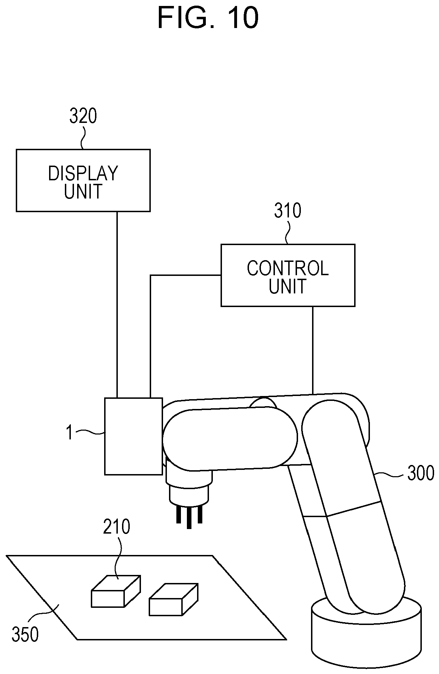

The measurement device 1 according to one or more of the exemplary embodiments described above may be used while being supported by a support member. In the present exemplary embodiment, a control system that is used while being attached to a robot arm 300 (holding device) as in Fig. 10 will be described as an example. The measurement device 1 performs image pickup by projecting a pattern light onto an object 210 to be inspected placed on a support 350 and acquires an image. The measurement device 1 includes a control unit 310 including the processing unit 4 described above. The processing unit 4 obtains information on the shape of the object 210 to be inspected from the acquired image. Then, the control unit 310 of the measurement device 1 or an external control unit that is connected to the control unit 310 obtains the position and orientation of the object to be inspected and acquires information on the obtained position and orientation. Based on the information on the position and orientation, the control unit 310 transmits a driving command to the robot arm 300 and controls the robot arm 300. The robot arm 300 holds the object 210 to be inspected with a robot hand (a holding portion) at the distal end and moves and rotates the object 210 to be inspected. Furthermore, by installing the object 210 to be inspected to another component with the robot arm 300, an article, which includes a plurality of components, such as an electronic circuit board or a machine can be manufactured. The control unit 310 includes an arithmetic unit, such as a CPU, and a storage device, such as a memory. Furthermore, the measurement data measured and the image obtained with the measurement device 1 may be displayed on a display unit 320, such as a display.

### Other Embodiments

Operation of the processing unit or the control unit according to one or more of the exemplary embodiments described above may be performed with the following configuration.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is defined in the following claims, and not limited to the disclosed exemplary embodiments.

## Claims

1. A measurement device (1) that measures a shape of an object (5) to be measured, comprising:
a processing unit (4) configured to obtain information on the shape of the object (5) to be measured on a basis of an image obtained by imaging the object to be measured on which a pattern light has been projected including a plurality of lines (BP) in which a distinguishing portion (DT) that distinguishes the lines (BP) from each other has been provided in each line, wherein
the processing unit is configured to acquire, from a luminosity distribution of the image, in an evaluation section (A,B,C) extending in a direction intersecting the lines (BP) of the pattern light, a plurality of positions including a peak position in which luminance is local maximum and a negative peak position in which the luminance is local minimum, wherein the processing unit is configured to specify a position of a distinguishing portion (DT) from among the plurality of positions in an evaluation section passing through the distinguishing portion, and to specify, from among said plurality of positions, a position next to the specified position of the distinguishing portion, and wherein the processing unit is configured to obtain the information on the shape of the object (5) to be measured based on the plurality of positions, including the specified position of the distinguishing portion (DT), but not based on the specified position next to the specified position of the distinguishing portion.

2. The measurement device (1) according to claim 1, wherein
the specified position next to the specified position of the distinguishing portion is a position that is affected by a displacement caused by the distinguishing portion (DT).

3. The measurement device (1) according to claim 1, wherein
the position next to the specified position of the distinguishing portion is specified based on a number of pixels from a center position of the distinguishing portion (DT) in a direction in which the plurality of lines in the image extends.

4. The measurement device (1) according to claim 1, wherein
the pattern light includes a bright line (BP) and a dark line (DP) alternating each other, and
the distinguishing portion (DT) is a distinguishing portion that distinguishes the bright line or the dark line.

5. The measurement device (1) according to claim 4, wherein
the distinguishing portion (DT) is a dark portion that is provided in the bright line (BP), and
the specified position next to the specified position of the distinguishing portion is a position between a first bright line (BP) in which the distinguishing portion (DT) is provided and a second bright line (BP) next to the first bright line (BP).

6. The measurement device (1) according to claim 4, wherein
the distinguishing portion is a dark portion (DT) that is provided in the bright line (BP), and
the specified position next to the specified position of the distinguishing portion (DT) is the position in which the luminance is the local minimum that is located around the distinguishing portion (DT).

7. The measurement device (1) according to claim 4, wherein
the distinguishing portion is a bright portion that is provided in the dark line, and
the specified position next to the specified position of the distinguishing portion is a position between a first dark line in which the distinguishing portion is provided and a second dark line next to the first dark line.

8. The measurement device (1) according to claim 4, wherein
the distinguishing portion is a bright portion that is provided in the dark line, and
the specified position next to the specified position of the distinguishing portion is the position in which the luminance is the local maximum that is located around the distinguishing portion.

9. The measurement device (1) according to claim 1, wherein
the processing unit is configured to determine intermediate positions between the position in which the luminance is the local maximum and the position in which the luminance is the local minimum,
the processing unit is configured to specify intermediate positions that are to be excluded on the basis of the position of the distinguishing portion, and
the processing unit is configured to use the intermediate positions, except those that have been specified to be excluded, and the plurality of positions, but not the specified position next to the specified position of the distinguishing portion, to obtain information on the shape of the object to be measured.

10. The measurement device (1) according to claim 9, wherein
the intermediate position is a position determined by an evaluation value of a luminance gradient obtained from the luminosity distribution of the image in the direction intersecting the lines.

11. The measurement device (1) according to claim 10, wherein
the intermediate position is a position where a value of the luminance gradient is extremal.

12. The measurement device (1) according to claim 9, wherein
the intermediate position is a middle point between a peak position in which the luminance is local maximum and a negative peak position in which the luminance is local minimum.

13. The measurement device according to claim 1, further comprising:
a projection unit (2) configured to project, onto the object to be measured, the pattern light; and
an image pickup unit (3) configured to acquire an image of the object to be measured by imaging the object to be measured on which the pattern light has been projected.

14. A measurement device (1) that measures a shape of an object (5) to be measured, comprising:
a processing unit (4) configured to obtain information on the shape of the object (5) to be measured on a basis of an image obtained by imaging the object to be measured on which a pattern light has been projected including a plurality of lines (BP) in which a distinguishing portion (DT) that distinguishes the lines from each other has been provided, wherein
the processing unit is configured to acquire, in a luminosity distribution of the image, in a direction intersecting the lines, a plurality of positions including a position in which luminance is largest and a position in which the luminance is smallest and an intermediate position between the position in which the luminance is the largest and the position in which the luminance is the smallest, wherein the processing unit is configured to specify an intermediate position to be excluded on the basis of the position of the distinguishing portion (DT), and wherein the processing unit is configured to obtain the information on the shape of the object (5) to be measured based on the plurality of positions except for the position that has been specified.

15. The measurement device according to claim 14, wherein the position in which the luminance is largest is a local maximum and a position in which the luminance is a smallest is a local minimum, wherein the processing unit is configured to specify a position of the distinguishing portion (PT) from the plurality of positions and to specify the intermediate position next to the position of the distinguishing portion in the direction intersecting the lines, and wherein the processing unit is configured to obtain the information on the shape of the object (5) to be measured based on the plurality of positions, including the specified position of the distinguishing portion (DT), but not based on the specified intermediate position next to the specified position of the distinguishing portion.

16. The measurement device according to claim 14, further comprising:
a projection unit (2) that projects, onto the object to be measured, the pattern light;
an image pickup unit (3) that acquires an image of the object to be measured by imaging the object to be measured on which the pattern light has been projected.

17. A method of measuring a shape of an object (5) to be measured, the method comprising:
Obtaining (S100, S101) information on the shape of the object (5) to be measured on a basis of an image of the object to be measured obtained by imaging the object to be measured on which a pattern light has been projected including a plurality of lines (BP) in which a distinguishing portion (DT) that distinguishes the lines from each other has been provided in each line,
acquiring (S102), from a luminosity distribution of the image, in an evaluation section extending in a direction intersecting the lines of the pattern light, a plurality of positions including a peak position in which luminance is local maximum and a negative peak position in which the luminance is local minimum,
specifying (S103, S104) a position of a distinguishing portion (DT) from among the plurality of positions in an evaluation section passing through the distinguishing portion, specifying, from among said plurality of positions, a position next to the specified position of the distinguishing portion (DT), and obtaining (S105) the information on the shape of the object to be measured based on the plurality of positions, including the specified position of the distinguishing portion (DT), but not based on the specified position next to the specified position of the distinguishing portion.

18. A method of measuring a shape of an object (5) to be measured, the method comprising:
obtaining (S100, S101) information on the shape of the object (5) to be measured on a basis of an image obtained by picking up an image of the object to be measured on which a pattern light has been projected including a plurality of lines (BP) in which a distinguishing portion (DT) that distinguishes the lines from each other has been provided,
acquiring (S102), in a luminosity distribution of the image, in a direction intersecting the lines, a plurality of positions including a position in which luminance is largest and a position in which the luminance is smallest and an intermediate position between the position in which the luminance is the largest and the position in which the luminance is the smallest,
specifying (S104), on the basis of the position of the distinguishing portion (DT), an intermediate position to be excluded, and
obtaining (S105) the information on the shape of the object (5) to be measured based on the plurality of positions except for the position that has been specified.

19. The method of measuring a shape according to claim 18, wherein the position in which the luminance is largest is a local maximum and a position in which the luminance is a smallest is a local minimum, the method comprising specifying a position of the distinguishing portion (PT) from the plurality of positions and specifying the intermediate position next to the position of the distinguishing portion in the direction intersecting the lines, and obtaining the information on the shape of the object (5) to be measured based on the plurality of positions, including the specified position of the distinguishing portion (DT), but not based on the specified intermediate position next to the specified position of the distinguishing portion.

20. A system, comprising:
the measurement device (1) according to any one of claims 1 to 16, the measurement device measuring an object (5) to be measured; and
a robot (300) configured to move the object to be measured on a basis of a measurement result of the measurement device (1) .

21. A method of manufacturing an article, comprising:
measuring a component with the measurement device (1) of the system according to claim 20;
moving the component with the robot (300) of the system according to claim 20; and
manufacturing an article by installing the component to another component with the robot (300).

## Patentansprüche

1. Messvorrichtung (1), welche die Form eines zu vermessenden Objekts (5) misst, umfassend:
eine Verarbeitungseinheit (4), die konfiguriert ist, Information über die Form des zu vermessenden Objekts (5) basierend auf einem Bild zu erhalten, das durch Abbilden des zu vermessenden Objekts erhalten wird, auf welches ein Musterlicht projiziert worden ist, das mehrere Linien (BP) enthält, in welchen ein die Linien (BP) voneinander unterscheidender Unterscheidungsbereich (DT) in jeder Linie vorgesehen ist, wobei
die Verarbeitungseinheit konfiguriert ist, aus einer Leuchtstärkenverteilung des Bildes in einem sich in einer die Linien (BP) des Musterlichts schneidenden Richtung erstreckenden Evaluationsabschnitt (A, B, C) mehrere Positionen zu erfassen, einschließlich einer Peak-Position, bei welcher die Luminanz ein lokales Maximum darstellt, und einer Position eines negativen Peaks, bei welcher die Luminanz ein lokales Minimum darstellt,
wobei die Verarbeitungseinheit konfiguriert ist, eine Position eines Unterscheidungsbereichs (DT) unter den mehreren Positionen in einem durch den Unterscheidungsbereich verlaufenden Evaluationsabschnitt zu spezifizieren, und unter den mehreren Positionen eine der spezifizierten Position des Unterscheidungsbereichs am nächsten gelegene Position zu spezifizieren, und wobei
die Verarbeitungseinheit konfiguriert ist, die Information über die Form des zu vermessenden Objekts (5) basierend auf den mehreren Positionen einschließlich der spezifizierten Position des Unterscheidungsbereichs (DT) zu erhalten, jedoch nicht basierend auf der der spezifizierten Position des Unterscheidungsbereichs am nächsten gelegenen Position.

2. Messvorrichtung (1) nach Anspruch 1, wobei die der spezifizierten Position des Unterscheidungsbereichs am nächsten gelegene Position eine Position ist, die von einem durch den Unterscheidungsbereich (DT) verursachten Versatz betroffen ist.

3. Messvorrichtung (1) nach Anspruch 1, wobei die der spezifizierten Position des Unterscheidungsbereichs am nächsten gelegene Position basierend auf einer Anzahl Pixel von einer Zentrumsposition des Unterscheidungsbereichs (DT) aus in eine Richtung, in welche sich die mehreren Linien im Bild erstrecken, spezifiziert wird.

4. Messvorrichtung (1) nach Anspruch 1, wobei
das Musterlicht eine helle Linie (BP) und eine dunkle Linie (DP) enthält, die einander abwechseln, und
der Unterscheidungsbereich (DT) ein Unterscheidungsbereich ist, der die helle Linie oder die dunkle Linie unterscheidet.

5. Messvorrichtung (1) nach Anspruch 4, wobei
der Unterscheidungsbereich (DT) ein in der hellen Linie (BP) vorgesehener dunkler Bereich ist, und
die der spezifizierten Position des Unterscheidungsbereichs am nächsten gelegene spezifizierte Position eine Position zwischen einer ersten hellen Linie (BP), in welcher der Unterscheidungsbereich (DT) vorgesehen ist, und einer der ersten hellen Linie (BP) am nächsten gelegenen zweiten hellen Linie (BP) ist.

6. Messvorrichtung (1) nach Anspruch 4, wobei
der Unterscheidungsbereich ein in der hellen Linie (BP) vorgesehener dunkler Bereich (DT) ist, und
die der spezifizierten Position des Unterscheidungsbereichs (DT) am nächsten gelegene spezifizierte Position die Position ist, bei welcher die Luminanz das lokale Minimum darstellt, welches sich um den Unterscheidungsbereich (DT) befindet.

7. Messvorrichtung (1) nach Anspruch 4, wobei
der Unterscheidungsbereich ein in der dunklen Linie vorgesehener heller Bereich ist, und
die der spezifizierten Position des Unterscheidungsbereichs am nächsten gelegene spezifizierte Position eine Position zwischen einer ersten dunklen Linie, in welcher der Unterscheidungsbereich vorgesehen ist, und einer der ersten dunklen Linie am nächsten gelegenen zweiten dunklen Linie ist.

8. Messvorrichtung (1) nach Anspruch 4, wobei
der Unterscheidungsbereich ein in der dunklen Linie vorgesehener heller Bereich ist, und
die der spezifizierten Position des Unterscheidungsbereichs am nächsten gelegene spezifizierte Position die Position ist, bei welcher die Luminanz das lokale Maximum darstellt, welches sich um den Unterscheidungsbereich befindet.

9. Messvorrichtung (1) nach Anspruch 1, wobei
die Verarbeitungseinheit konfiguriert ist, Zwischenpositionen zwischen der Position, bei welcher die Luminanz das lokale Maximum darstellt, und der Position, bei welcher die Luminanz das lokale Minimum darstellt, zu bestimmen,
die Verarbeitungseinheit konfiguriert ist, auszuschließende Zwischenpositionen basierend auf der Position des Unterscheidungsbereichs zu spezifizieren, und
die Verarbeitungseinheit konfiguriert ist, die Zwischenpositionen zu verwenden, mit Ausnahme der als auszuschließenden spezifizierten Zwischenpositionen, sowie die mehreren Positionen zu verwenden, jedoch nicht die der spezifizierten Position des Unterscheidungsbereichs am nächsten gelegene spezifizierte Position, um Information über die Form des zu vermessenden Objekts zu erhalten.

10. Messvorrichtung (1) nach Anspruch 9, wobei
die Zwischenposition eine Position ist, die durch einen Evaluationswert eines Luminanzgradienten bestimmt wird, der aus der Leuchtstärkenverteilung des Bildes in der die Linien schneidenden Richtung erhalten wird.

11. Messvorrichtung (1) nach Anspruch 10, wobei
die Zwischenposition eine Position ist, an der ein Wert des Luminanzgradienten extrem ist.

12. Messvorrichtung (1) nach Anspruch 9, wobei
die Zwischenposition ein Mittelpunkt zwischen einer Peak-Position, bei welcher die Luminanz ein lokales Maximum darstellt, und einer Position eines negativen Peaks ist, bei welcher die Luminanz ein lokales Minimum darstellt.

13. Messvorrichtung nach Anspruch 1, ferner umfassend:
eine Projektionseinheit (2), die konfiguriert ist, auf das zu vermessende Objekt Musterlicht zu projizieren; und
eine Bildaufnahmeeinheit (3), die konfiguriert ist, ein Bild des zu vermessenden Objekts durch Abbilden des zu vermessenden Objekts, auf welches das Musterlicht projiziert worden ist, zu erfassen.

14. Messvorrichtung (1), welche die Form eines zu vermessenden Objekts (5) misst, umfassend:
eine Verarbeitungseinheit (4), die konfiguriert ist, Information über die Form des zu vermessenden Objekts (5) basierend auf einem Bild zu erhalten, das durch Abbilden des zu vermessenden Objekts erhalten wird, auf welches ein Musterlicht projiziert worden ist, das mehrere Linien (BP) enthält, in welchen ein die Linien voneinander unterscheidender Unterscheidungsbereich (DT) vorgesehen ist, wobei
die Verarbeitungseinheit konfiguriert ist, in einer Leuchtstärkenverteilung des Bildes in einer die Linien schneidenden Richtung mehrere Positionen zu erfassen, einschließlich einer Position, bei welcher die Luminanz am größten ist, und einer Position, bei welcher die Luminanz am geringsten ist, sowie einer Zwischenposition zwischen der Position, bei welcher die Luminanz am größten ist, und der Position, bei welcher die Luminanz am geringsten ist,
wobei die Verarbeitungseinheit konfiguriert ist, eine auszuschließende Zwischenposition basierend auf der Position des Unterscheidungsbereichs (DT) zu spezifizieren, und
wobei die Verarbeitungseinheit konfiguriert ist, die Information über die Form des zu vermessenden Objekts (5) basierend auf den mehreren Positionen, mit Ausnahme der spezifizierten Position, zu erhalten.

15. Messvorrichtung nach Anspruch 14, wobei die Position, bei welcher die Luminanz am größten ist, ein lokales Maximum darstellt und eine Position, bei welcher die Luminanz am geringsten ist, ein lokales Minimum darstellt, wobei
die Verarbeitungseinheit konfiguriert ist, eine Position des Unterscheidungsbereichs (PT) unter den mehreren Positionen zu spezifizieren und die der Position des Unterscheidungsbereichs am nächsten gelegene Zwischenposition in der die Linien schneidenden Richtung zu spezifizieren, und wobei
die Verarbeitungseinheit konfiguriert ist, die Information über die Form des zu vermessenden Objekts (5) basierend auf den mehreren Positionen, einschließlich der spezifizierten Position des Unterscheidungsbereichs (DT), jedoch nicht basierend auf der der spezifizierten Position des Unterscheidungsbereichs am nächsten gelegenen spezifizierten Zwischenposition, zu erhalten.

16. Messvorrichtung nach Anspruch 14, ferner umfassend:
eine Projektionseinheit (2), die auf das zu vermessende Objekt Musterlicht projiziert;
eine Bildaufnahmeeinheit (3), die ein Bild des zu vermessenden Objekts durch Abbilden des zu vermessenden Objekts erfasst, auf welches das Musterlicht projiziert worden ist.

17. Verfahren zum Messen einer Form eines zu vermessenden Objekts (5), wobei das Verfahren umfasst:
Erhalten (S100, S101) von Information über die Form des zu vermessenden Objekts (5) basierend auf einem Bild des zu vermessenden Objekts, das durch Abbilden des zu vermessenden Objekts erhalten wird, auf welches ein Musterlicht projiziert worden ist, das mehrere Linien (BP) enthält, in welchen ein die Linien voneinander unterscheidender Unterscheidungsbereich (DT) in jeder Linie vorgesehen ist,
Erfassen (S102) mehrerer Positionen in einem sich in einer die Linien des Musterlichts schneidenden Richtung erstreckenden Evaluationsabschnitt aus einer Leuchtstärkenverteilung des Bildes, einschließlich einer Peak-Position, bei welcher die Luminanz ein lokales Maximum darstellt, und einer Position eines negativen Peaks, bei welcher die Luminanz ein lokales Minimum darstellt,
Spezifizieren (S103, S104) einer Position eines Unterscheidungsbereichs (DT) unter den mehreren Positionen in einem durch den Unterscheidungsbereich verlaufenden Evaluationsabschnitt,
Spezifizieren einer der spezifizierten Position des Unterscheidungsbereichs (DT) am nächsten gelegenen Position unter den mehreren Positionen, und
Erhalten (S105) der Information über die Form des zu vermessenden Objekts basierend auf den mehreren Positionen einschließlich der spezifizierten Position des Unterscheidungsbereichs (DT), jedoch nicht basierend auf der der spezifizierten Position des Unterscheidungsbereichs am nächsten gelegenen spezifizierten Position.

18. Verfahren zum Messen einer Form eines zu vermessenden Objekts (5), wobei das Verfahren umfasst:
Erhalten (S100, S101) von Information über die Form des zu vermessenden Objekts (5) basierend auf einem Bild, das durch Aufnehmen eines Bildes des zu vermessenden Objekts erhalten wird, auf welches ein Musterlicht projiziert worden ist, das mehrere Linien (BP) enthält, in welchen ein die Linien voneinander unterscheidender Unterscheidungsbereich (DT) vorgesehen ist,
Erfassen (S102) mehrerer Positionen in einer Leuchtstärkenverteilung des Bildes in einer die Linien schneidenden Richtung, einschließlich einer Position, bei welcher die Luminanz am größten ist, und einer Position, bei welcher die Luminanz am geringsten ist, sowie einer Zwischenposition zwischen der Position, bei welcher die Luminanz am größten ist, und der Position, bei welcher die Luminanz am geringsten ist,
Spezifizieren (S104) einer auszuschließenden Zwischenposition basierend auf der Position des Unterscheidungsbereichs (DT), und
Erhalten (S105) der Information über die Form des zu vermessenden Objekts (5) basierend auf den mehreren Positionen, mit Ausnahme der spezifizierten Position.

19. Verfahren zum Messen einer Form nach Anspruch 18, wobei die Position, bei welcher die Luminanz am größten ist, ein lokales Maximum darstellt und eine Position, bei welcher die Luminanz am geringsten ist, ein lokales Minimum darstellt, wobei das Verfahren umfasst
Spezifizieren einer Position des Unterscheidungsbereichs (PT) unter den mehreren Positionen und Spezifizieren der der Position des Unterscheidungsbereichs am nächsten gelegenen Zwischenposition in der die Linien schneidenden Richtung, und
Erhalten der Information über die Form des zu vermessenden Objekts (5) basierend auf den mehreren Positionen, einschließlich der spezifizierten Position des Unterscheidungsbereichs (DT), jedoch nicht basierend auf der der spezifizierten Position des Unterscheidungsbereichs am nächsten gelegenen spezifizierten Zwischenposition.

20. System, umfassend:
die Messvorrichtung (1) nach einem der Ansprüche 1 bis 16, wobei die Messvorrichtung ein zu vermessendes Objekt (5) misst; und
einen Roboter (300), der konfiguriert ist, das zu vermessende Objekt basierend auf einem Messergebnis der Messvorrichtung (1) zu bewegen.

21. Verfahren zum Herstellen eines Artikels, umfassend:
Messen einer Komponente mithilfe der Messvorrichtung (1) des Systems nach Anspruch 20;
Bewegen der Komponente mithilfe des Roboters (300) des Systems nach Anspruch 20; und
Herstellen eines Artikels durch Installieren der Komponente in eine andere Komponente mithilfe des Roboters (300).

## Revendications

1. Dispositif de mesure (1) qui mesure une forme d'un objet (5) à mesurer, comprenant :
une unité de traitement (4) configurée pour obtenir des informations concernant la forme de l'objet (5) à mesurer sur la base d'une image obtenue par une mise en image de l'objet à mesurer sur lequel a été projetée une lumière de motif comprenant une pluralité de lignes (BP) dans lesquelles a été placée, dans chaque ligne, une partie de différenciation (DT) qui différencie les lignes (BP) les unes des autres, dans lequel
l'unité de traitement est configurée pour acquérir, à partir d'une distribution de luminosité de l'image, dans une section d'évaluation (A, B, C) s'étendant dans une direction coupant les lignes (BP) de la lumière de motif, une pluralité de positions comprenant une position de crête à laquelle la luminance est à maximum local et une position de crête négative à laquelle la luminance est à un minimum local,
dans lequel l'unité de traitement est configurée pour spécifier une position d'une partie de différenciation (DT) parmi la pluralité de positions dans une section d'évaluation passant par la partie de différenciation, et pour spécifier, parmi ladite pluralité de positions, une position située à proximité de la position spécifiée de la partie de différenciation, et dans lequel
l'unité de traitement est configurée pour obtenir les informations concernant la forme de l'objet (5) à mesurer sur la base la pluralité de positions, incluant la position spécifiée de la partie de différenciation (DT), mais pas sur la base de la position spécifiée située à proximité de la position spécifiée de la partie de différenciation.

2. Dispositif de mesure (1) selon la revendication 1, dans lequel la position spécifiée située à proximité de la position spécifiée de la partie de différenciation est une position affectée par un déplacement provoqué par la partie de différenciation (DT).

3. Dispositif de mesure (1) selon la revendication 1, dans lequel la position située à proximité de la position spécifiée de la partie de différenciation est spécifiée sur la base d'un nombre de pixels par rapport à une position centrale de la partie de différenciation (DT) dans une direction dans laquelle s'étend la pluralité de lignes dans l'image.

4. Dispositif de mesure (1) selon la revendication 1, dans lequel :
la lumière de motif comprend une ligne claire (BP) et une ligne sombre (DP) alternées, et
la partie de différenciation (DT) est une partie de différenciation qui différencie la ligne claire ou la ligne sombre.

5. Dispositif de mesure (1) selon la revendication 4, dans lequel :
la partie de différenciation (DT) est une partie sombre qui se trouve dans la ligne claire (BP), et
la position spécifiée située à proximité de la position spécifiée de la partie de différenciation est une position située entre une première ligne claire (BP) dans laquelle se trouve la partie de différenciation (DT) et une seconde ligne claire (BP) située à proximité de la première ligne claire (BP).

6. Dispositif de mesure (1) selon la revendication 4, dans lequel :
la partie de différenciation est une partie sombre (DT) qui se trouve dans la ligne claire (BP), et
la position spécifiée située à proximité de la position spécifiée de la partie de différenciation (DT) est la position à laquelle la luminance est au minimum local qui entoure la partie de différenciation (DT).

7. Dispositif de mesure (1) selon la revendication 4, dans lequel :
la partie de différenciation est une partie claire qui est située dans la ligne sombre, et
la position spécifiée située à proximité de la position spécifiée de la partie de différenciation est une position située entre une première ligne sombre dans laquelle est située la partie de différenciation et une seconde ligne sombre située à proximité de la première ligne sombre.

8. Dispositif de mesure (1) selon la revendication 4, dans lequel :
la partie de différenciation est une partie claire qui est située dans la ligne sombre, et
la position spécifiée située à proximité de la position spécifiée de la partie de différenciation est la position à laquelle la luminance est au maximum local qui entoure la partie de différenciation.

9. Dispositif de mesure (1) selon la revendication 1, dans lequel :
l'unité de traitement est configurée pour déterminer des positions intermédiaires entre la position à laquelle la luminance est au maximum local et la position à laquelle la luminance est au minimum local,
l'unité de traitement est configurée pour spécifier des positions intermédiaires devant être exclues sur la base de la position de la partie de différenciation, et
l'unité de traitement est configurée pour utiliser les positions intermédiaires, à l'exception de celles qui ont été spécifiées comme devant être exclues, et la pluralité de positions, mais pas la position spécifiée située à proximité de la position spécifiée de la partie de différenciation, pour obtenir des informations concernant la forme de l'objet à mesurer.

10. Dispositif de mesure (1) selon la revendication 9, dans lequel la position intermédiaire est une position déterminée par une valeur d'évaluation d'un gradient de luminance obtenu à partir de la distribution de luminosité de l'image dans la direction coupant les lignes.

11. Dispositif de mesure (1) selon la revendication 10, dans lequel la position intermédiaire est une position au niveau de laquelle le gradient a une valeur de gradient de luminance extrême.

12. Dispositif de mesure (1) selon la revendication 9, dans lequel la position intermédiaire est une position de point milieu située entre une position de crête à laquelle la luminance est au maximum local et une position de crête négative à laquelle la luminance est au minimum local.

13. Dispositif de mesure selon la revendication 1, comprenant en outre :
une unité de projection (2) configurée pour projeter la lumière de motif sur l'objet à mesurer ; et
une unité de capture d'image (3) configurée pour acquérir une image de l'objet à mesurer par une mise en image de l'objet à mesurer sur lequel a été projetée la lumière de motif.

14. Dispositif de mesure (1) qui mesure une forme d'un objet (5) à mesurer, comprenant :
une unité de traitement (4) configurée pour obtenir des informations concernant la forme de l'objet (5) à mesurer sur la base d'une image obtenue par une mise en image de l'objet à mesurer sur lequel a été projetée une lumière de motif comprenant une pluralité de lignes (BP) dans lesquelles a été placée une partie de différenciation (DT) qui différencie les lignes les unes des autres, dans lequel
l'unité de traitement est configurée pour acquérir, à partir d'une distribution de luminosité de l'image, dans une direction coupant les lignes, une pluralité de positions comprenant une position à laquelle la luminance a la valeur la plus grande et une position à laquelle la luminance a la valeur la plus petite et une position intermédiaire située entre la position à laquelle la luminance a la valeur la plus grande et la position à laquelle la luminance a la valeur la plus petite,
dans lequel l'unité de traitement est configurée pour spécifier une position intermédiaire devant être exclue sur la base de la position de la partie de différenciation (DT), et
dans lequel l'unité de traitement est configurée pour obtenir les informations concernant la forme de l'objet (5) à mesurer sur la base de la pluralité de positions à l'exception de la position qui a été spécifiée.

15. Dispositif de mesure selon la revendication 14, dans lequel la position à laquelle la luminance a la valeur la plus grande correspond à un maximum local et une position à laquelle la luminance a la valeur la plus petite correspond à un minimum local, dans lequel
l'unité de traitement est configurée pour spécifier une position de la partie de différenciation (PT) parmi la pluralité de positions et pour spécifier la position intermédiaire située à proximité de la position de la partie de différenciation dans la direction coupant les lignes, et dans lequel
l'unité de traitement est configurée pour obtenir les informations concernant la forme de l'objet (5) à mesurer sur la base de la pluralité de positions, incluant la position spécifiée de la partie de différenciation (DT), mais pas sur la base de la position intermédiaire spécifiée située à proximité de la position spécifiée de la partie de différenciation.

16. Dispositif de mesure selon la revendication 14, comprenant en outre :
une unité de projection (2) qui projette la lumière de motif sur l'objet à mesurer ;
une unité de capture d'image (3) qui acquiert une image de l'objet à mesurer par une mise en image de l'objet à mesurer sur lequel a été projetée la lumière de motif.

17. Procédé de mesure d'une forme d'un objet (5) à mesurer, le procédé consistant à :
obtenir (S100, S101) des informations concernant la forme de l'objet (5) à mesurer sur la base d'une image de l'objet à mesurer obtenue par une mise en image de l'objet à mesurer sur lequel a été projetée une lumière de motif comprenant une pluralité de lignes (BP) dans lesquelles a été placée, dans chaque ligne, une partie de différenciation (DT) qui différencie les lignes les unes des autres,
acquérir (S102), à partir d'une distribution de luminosité de l'image, dans une section d'évaluation s'étendant dans une direction coupant les lignes de la lumière de motif, une pluralité de positions comprenant une position de crête à laquelle la luminance est à un maximum local et une position de crête négative à laquelle la luminance est à un minimum local,
spécifier (S103, S104) une position d'une partie de différenciation (DT) parmi la pluralité de positions dans une section d'évaluation passant par la partie de différenciation,
spécifier, parmi ladite pluralité de positions, une position située à proximité de la position spécifiée de la partie de différentiation (DT), et
obtenir (S105) les informations concernant la forme de l'objet à mesurer sur la base de la pluralité de positions, incluant la position spécifiée de la partie de différenciation (DT), mais pas sur la base de la position spécifiée située à proximité de la position spécifiée de la partie de différenciation.

18. Procédé de mesure d'une forme d'un objet (5) à mesurer, le procédé consistant à :
obtenir (S100, S101) des informations concernant la forme de l'objet (5) à mesurer sur la base d'une image obtenue par une capture d'une image de l'objet à mesurer sur lequel a été projetée une lumière de motif comprenant une pluralité de lignes (BP) dans lesquelles a été placée une partie de différenciation (DT) qui différencie les lignes les unes des autres,
acquérir (S102), à partir d'une distribution de luminosité de l'image, dans une direction coupant les lignes, une pluralité de positions comprenant une position à laquelle la luminance a la valeur la plus grande et une position à laquelle la luminance a la valeur la plus petite et une position intermédiaire située entre la position à laquelle la luminance a la valeur la plus grande et la position à laquelle la luminance a la valeur la plus petite,
spécifier (S104), sur la base de la position de la partie de différenciation (DT), une position intermédiaire devant être exclue, et
obtenir (S105) les informations concernant la forme de l'objet (5) à mesurer sur la base de la pluralité de positions à l'exception de la position qui a été spécifiée.

19. Procédé de mesure d'une forme selon la revendication 18, dans lequel la position à laquelle la luminance a la valeur la plus grande correspond à un maximum local et une position à laquelle la luminance a la valeur la plus petite correspond à un minimum local, le procédé consistant à spécifier une position de la partie de différenciation (PT) parmi la pluralité de positions et à spécifier la position intermédiaire située à proximité de la position de la partie de différenciation dans la direction coupant les lignes, et obtenir les informations concernant la forme de l'objet (5) à mesurer sur la base de la pluralité de positions, incluant la position spécifiée de la partie de différenciation (DT), mais pas sur la base de la position intermédiaire spécifiée située à proximité de la position spécifiée de la partie de différenciation.

20. Système, comprenant :
le dispositif de mesure (1) selon l'une quelconque des revendications 1 à 16, le dispositif de mesure mesurant un objet (5) à mesurer ; et
un robot (300) configuré pour déplacer l'objet à mesurer sur la base d'un résultat de mesure du dispositif de mesure (1).

21. Procédé de fabrication d'un article, consistant à :
mesurer un composant au moyen du dispositif de mesure (1) du système selon la revendication 20 ;
déplacer le composant au moyen du robot (300) du système selon la revendication 20 ; et
fabriquer un article par installation du composant par rapport à un autre composant au moyen du robot (300).
